(19) Europäisches Patentamt
European Patent Office
Office européen des brevets

(11) Veröffentlichungsnummer: **0 373 462**
**A2**

# (12) EUROPÄISCHE PATENTANMELDUNG

(21) Anmeldenummer: **89122283.8**

(22) Anmeldetag: **02.12.89**

(51) Int. Cl.5: **C08G 18/32, C08G 18/50, C08K 5/34, C08K 5/53**

(30) Priorität: **16.12.88 DE 3842385**

(43) Veröffentlichungstag der Anmeldung:
**20.06.90 Patentblatt 90/25**

(84) Benannte Vertragsstaaten:
**AT BE CH DE ES FR GB IT LI NL SE**

(71) Anmelder: **BAYER AG**

**D-5090 Leverkusen 1 Bayerwerk(DE)**

(72) Erfinder: **Haas, Peter, Dr.**
**Zwengenberger Strasse 43**
**D-5657 Haan 1(DE)**
Erfinder: **Hettel, Hans, Dr.**
**Jägerstrasse 20**
**D-5064 Rösrath-Forsbach(DE)**
Erfinder: **Jacobs, Gundolf, Dr.**
**Wickenpfädchen 25**
**D-5060 Bergisch Gladbach(DE)**

## (54) Verfahren zur Herstellung von Polyurethanschaumstoffen.

(57) Die Erfindung betrifft ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3), Wasser und/oder organischen Treibmitteln und 4) Katalysatoren und 5) Melamin als Flammschutzmittel und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5) Melamin mit einer Korngröße von 5 bis 90 µm, vorzugsweise von 5 bis 50 µm, verwendet wird.

EP 0 373 462 A2

## Verfahren zur Herstellung von Polyurethanschaumstoffen

Seit langem wird versucht, Polyurethanschaumstoffe flammwidriger einzustellen. Dieses Thema wird auch deshalb ständig bearbeitet, weil die Anforderungen bezüglich einer Entflammbarkeit laufend angehoben werden.

So fand in jüngster Zeit in Großbritannien die Consumer Protection 1988/Nr. 1324 mit ihren Furniture and Furnishings Fire Safety Regulations starke Beachtung, da dort nur noch Schaumstoffe mit hoher Entflammbarkeitsresistenz verwendet werden dürfen. Als Maß hierfür dient eine 17 g schwere Holzkrippe, die mittels einer bestimmten Menge Isopropanol versetzt und auf einer Sesselform, die mit dem Schaumstoff ausgerüstet ist, entzündet wird. Die Flammen müssen innerhalb von 10 Minuten verlöschen, der Masseverlust darf nicht mehr als 60 g betragen.

Dieser Test stellt an die Schaumstoffe besonders strenge Forderungen bezüglich ihrer Entzündungsresistenz. In jüngster Zeit wird zudem versucht, die Verwendung von Phosphorsäureestern bzw. Halogenalkylphosphorsäureestern als Flammschutzmittel einzuschränken.

Ein weiterer Weg wurde durch die Verwendung von Melamin als Flammschutzmittel beschritten. In diesem Zusammenhang seien die DE-OS 2 809 084, GB-PS 2 177 406, DE-OS-2 815 554, DE-OS 3 530 519 sowie GB-PS 2 094 315 erwähnt.

Es hat sich aber gezeigt, daß das bisher verwendete Melamin noch keinen ausreichenden Flammschutz der Polyurethanschaumstoffe beim Dauergebrauch bewirkt. Dieser wird, wie nun gefunden wurde, erst erreicht, wenn Melamin in einer bestimmten Korngröße als Flammschutzmittel eingesetzt wird.

Gegenstand der Erfindung ist ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3) Wasser und/oder organischen Treibmitteln, 4) Katalysatoren, 5) Melamin als Flammschutzmittel und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5) Melamin mit einer Korngröße von 5 bis 90 µm, vorzugsweise von 5 bis 50 µm, verwendet wird.

Erfindungsgemäß ist bevorzugt, daß als Komponente 2) polymermodifizierte Polypolyole und/oder Polyole mit überwiegend primären Hydroxylgruppen verwendet werden.

Bevorzugte Ausführungsformen des erfindungsgemäßen Verfahrens sind, daß

- als polymermodifizierte Polyole Polyharnstoffdispersionen in Polyethern verwendet werden,
- als polymermodifizierte Polyole Alkanolaminaddukte von Diisocyanaten in Polyolen verwendet werden,
- als polymermodifizierte Polyole gepfropfte Polyether, die durch Polymerisation von Acrylnitril und/oder Styrol in Polyethern erhalten wurden, verwendet werden, und daß
- weitere Flammschutzmittel mitverwendet werden.

Für die Herstellung der Polyurethanschaumstoffe werden als Ausgangskomponenten eingesetzt:

1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der

n = 2 - 4, vorzugsweise 2,

und

Q einen aliphatischen Kohlenwasserstoffrest mit 2 -18, vorzugsweise 6 - 10 C-Atomen,

einen cycloaliphatischen Kohlenwasserstoffrest mit 4 -15, vorzugsweise 5 - 10 C-Atomen,

einen aromatischen Kohlenwasserstoffrest mit 6 - 15, vorzugsweise 6 - 13 C-Atomen,

oder einen araliphatischen Kohlenwasserstoffrest mit 8 -15, vorzugsweise 8 - 13 C-Atomen,

bedeuten, z.B. solche Polyisocyanate, wie sie in der DE-OS 2 832 253, Seiten 10 - 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensatin und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Ausgangskomponenten sind a) ferner die an sich bekannten "polymermodifizierten" Polyole. Bevorzugt sind Dispersionen von Polymeren enthaltenden höhermolekularen Hydroxylverbindungen, die

durch Umsetzung von Mono- und/ oder Polyisocyanaten mit primäre und/oder sekundäre Aminogruppen aufweisenden Polyaminen und/oder Hydrazinen und/oder Hydraziden und/oder Alkanolaminen in einer 1 bis 8 primäre und/oder sekundäre Hydroxylgruppen aufweisenden Verbindung mit einem Molekulargewicht von 400 bis 10.000 hergestellt worden sind.

Derartige Dispersionen von Polymeren enthaltenden höhermolekularen Hydroxylverbindungen sind z. B. aus DE-AS 25 19 004, DE-OS 25 50 796, DE-OS 25 50 797, DE-OS 25 50 860, DE-OS 25 50 833, DE-OS 25 50 862, DE-OS 26 38 759, DE-OS 26 39 254, US-PS 43 74 209, EP-A 00 79 115 und US-PS 4 381 351 bekannt.

In Frage kommen ferner Dispersionen von Reaktionsprodukten von Polyisocyanaten und Alkanolaminen in Polyethern (vgl. z.B. DE-OS 3 103 757) und Dispersionen von Homo- oder Copolymerisaten von ungesättigten Monomeren wie Styrol oder Acrylnitril in Polyethern (sog. "Polymer-Polyole").

b) Die alleinige Verwendung von "aktiven" höhermolekularen Hydroxylverbindungen, d.h. von solchen, die überwiegend primäre OH-Gruppen aufweisen und die keine dispergierten höhermolekularen Anteile enthalten, ist grundsätzlich erfindungsgemäß auch möglich. Derartige aktive Polyole sind an sich bekannt.

3. Als Treibmittel werden Wasser (bevorzugt) und/ oder leicht flüchtige organische Substanzen verwendet.

4. Erfindungsgemäß werden die aus der Polyurethanchemie an sich bekannten Katalysatoren wie tert.-Amine und/oder metallorganische Verbindungen eingesetzt.

5. Als Flammschutzmittel wird Melamin mit einer Korngröße von 5 bis 90 µm, vorzugsweise von 5 bis 49 µm verwendet. Es wird vorzugsweise in einer Menge von 15 bis 100 Gew.-Teilen, vorzugsweise 15 bis 50 Gew.-Teilen, bezogen auf 100 Gew.-Teile der Komponente 2), eingesetzt. Die Korngröße des Melamins wird durch Siebanalyse und Mikroskopie bestimmt.

Weitere Flammschutzmittel können mitverwendet werden, z.B. Aluminiumoxide, Aluminiumoxidhydrate, Melamin, Melaminderivate, Melaminsalze, Cyanamid und Dicyandiamid oder vorzugsweise Trischlorethylphosphat, ferner vorzugsweise Phosphonsäureester der allgemeinen Formel (I)

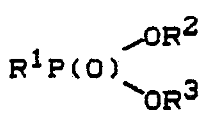

(I)

in welcher

$R^1$, $R^2$ und $R^3$ gleich oder verschieden sind und einen gesättigten oder ungesättigten $C_1$-$C_6$-Alkylrest, einen $C_5$-$C_{12}$-Cycloalkylrest, einen $C_7$-$C_{15}$-Aralkylrest oder einen $C_6$-$C_{12}$-Arylrest bedeuten,

wie Methylphosphonsäuredimethylester, Ethyl- und Phenylphosphonsäuredimethylester, ferner Vinyl- und Allylphosphonsäuredimethylester. Die Coflammschutzmittel werden vorzugsweise in Mengen von 5 bis 20 Gew.-Teilen, bezogen auf 100 Gew.-Teile der Komponente 2), eingesetzt.

6. Ausgangskomponenten sind ferner gegebenenfalls Verbindungen mit mindestens zwei gegenüber Isocyanaten reaktionsfähigen Wasserstoffatomen mit einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

7. Gegebenenfalls mitzuverwenden sind auch oberflächenaktive Zusatzstoffe, wie Emulgatoren und Schaumstabilisatoren. Als Emulgatoren sind solche auf Basis alkoxylierter Fettsäuren und höherer Alkohole bevorzugt.

Als Schaumstabilisatoren kommen vor allem Polyethersiloxane, speziell wasserunlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 2 834 748, 2 917 480 und 3 629 308 beschrieben; sie sind zur Herstellung von hochelastischen (HR) Schaumstoffen jedoch nicht so geeignet.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch,

Band VII, herausgegeben von Vieweg und Höchtlen, Carl-Hanser-Verlag, München 1966. z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die Entzündungsversuche unter den starken Anforderungen des Crib 5-Testes nach BS 5852, Part 2, zeigen, daß die erfindungsgemäßen Verbindungen als Flammschutzmittel hervorragend geeignet sind. Vorteilhaft sind auch die mechanischen Eigenschaften der resultierenden Schaumstoffe.

Die flammwidrigen Polyurethanschaumstoffe werden zur Konfektionierung von Möbeln und zur Herstellung von Matratzen mit erhöhten Flammschutznormen und Sicherheitsbestimmungen, z.B. gemäß BS 5852, Part 2 und den dort aufgeführten Entzündungsquellen, verwendet.

Anwendung finden diese flammwidrigen Schaumstoffe zur Ausrüstung von Sitzmöbeln in Theatern, Kinos, im Privatbereich und Gaststätten sowie zur Ausrüstung von Liegemöbeln.

Die Schaumstoffe können nach verschiedenen Verfahren der Blockschaumstoffherstellung oder aber in Formen hergestellt werden. Erfindungsgemäß gelingt es, Schaumstoffe, die den genannten Flammschutzanforderungen genügen, mit einer niedrigen Rohdichte bis zu 22 kg/m$^3$ herzustellen.

Für die für die Herstellung von Polyurethanschaumstoffen bekannten Reaktionstechnik werden umgesetzt:

Beispiel 1

100 Teile einer Dispersion eines Polyharnstoffs aus Hydrazin und Toluylendiisocyanat in einem aktiven Polyetherpolyol aus Trimethylolpropan, Propylenoxid und Ethylenoxid, OH-Zahl 32, Füllstoffgehalt 10 Gew.-%
4,0 Teile Wasser
1,0 Teile Diethanolamin
1,0 Teile Aminvernetzer PU 3226 auf der Basis eines höheren Alkanolamins der Bayer AG
0,2 Teile Dabco® 33LV (Houdry Hüls), Lösung von Triethylendiamin DPG
0,25 Teile Stabilisator AC 3367 der Bayer AG, kurzkettig ethermodifiziertes Silicon
0,15 Teile Zinn-2-ethyl-hexoat
25 Teile Melamin der Korngröße 10 µm
10 Teile Tris-(2-chlorethyl)-phosphat
52,9 Teile Toluylendiisocyanat (80 Gew.-% 2,4- und 20 Gew.-% 2,6-Isomeres)
Startzeit des Reaktionsgemisches: 11 sec.
Rohdichte des Schaumstoffs: 26 kg m$^{-3}$

Der Schaumstoff wird vor der Brandprüfung durch Drücken offenzellig gemacht, wobei der Luftwiderstand dann 50 mm Wassersäule beträgt.

Prüfung gemäß BS 5852, Ignition Source 5
Brandzeit: 255 Sekunden
Masseverlust: 53 g
Consumer Protection Nr. 1324/1988 (GB) bestanden

Beispiel 2 (Vergleich)

100 Teile Polyharnstoffdispersion gemäß Beispiel 1
4,0 Teile Wasser
1,0 Teile Diethanolamin

1,0 Teile Aminvernetzer PU 3226 gemäß Beispiel 1
0,2 Teile Dabco® 33LV gemäß Beispiel 1
0,25 Teile Stabilisator AC 3367 gemäß Beispiel 1
0,2 Teile Zinn-2-ethyl-hexoat
25 Teile Melamin der Korngröße 120 µm
10 Teile Tris-(2-chlorethyl)-phosphat
52,9 Teile Polyisocyanat gemäß Beispiel 1
Startzeit des Reaktionsgemisches: 11 sec.
Rohdichte des Schaumstoffs: 26 kg $m^{-3}$

Der Schaumstoff wird vor der Brandprüfung offenzellig gemacht und hat einen Luftwiderstand von 50 mm Wassersäule.

Prüfung gemäß BS 5852, Ign. Source 5
Brandzeit: 523 Sekunden
Masseverlust: 226 g
Consumer Prot. Nr. 1324/1988 (GB) nicht bestanden

Beispiel 3

100 Teile Polyharnstoffdispersion gemäß Beispiel 1
4,0 Teile Wasser
1,0 Teile Diethanolamin
1,0 Teile Aminvernetzer PU 3226 der Bayer AG (gemäß Beispiel 1)
0,2 Teile Dabco® 33LV gemäß Beispiel 1
1,0 Teile Stabilisator AC 3367
0,15 Teile Zinn-2-ethyl-hexoat
25 Teile Melamin der Korngröße 10 µm
2 Teile Tris-(2-chlorethyl)-phosphat
6 Teile Kioxtol (Brom- und Phosphor enthaltende Flammschutzmittel der Wye Ind. Australien)
52,9 Teile Polyisocyanat gemäß Beispiel 1
Startzeit des Reaktionsgemisches: 11 sec.
Rohdichte des Schaumstoffs: 26 kg $m^{-3}$

Der Schaumstoff wird durch Kompression auf einen Luftdruckwiderstandswert von 50 mm Wassersäule gebracht.

Prüfung gemäß BS 5852
Brandzeit: 305 Sekunden
Masseverlust: 58 g
Consumer Prot. Nr. 1324/1988 (GB) bestanden

Beispiel 4

100 Teile Polyharnstoffdispersion gemäß Beispiel 1
4,0 Teile Wasser
1,0 Teile Diethanolamin
1,0 Teile Aminvernetzer PU 3226 der Bayer AG
0,2 Teile Dabco® 33LV
1,0 Teile Stabilisator AC 3367 der Bayer AG
0,15 Teile Zinn-2-ethyl-hexoat
25 Teile Melamin der Korngröße 10 µm
2 Teile Tris-(2-chlorethyl)-phosphat
10 Teile Fire Master CD75 der Great Lakes (Bromenthaltendes Flammschutzmittel)
52,9 Teile Polyisocyanat gemäß Beispiel 1
Startzeit des Reaktionsgemisches: 11 sec.
Rohdichte des Schaumstoffs: 26 kg $m^{-3}$

Der Schaumstoff wird durch Kompression offenzellig gemacht. Luftwiderstandswert 50 mm Wassersäule.

Prüfung gemäß BS 5852
Brandzeit: 360 Sekunden
Masseverlust: 58 g
Consumer Prot. Nr. 1324/1988 (GB) bestanden

Die Beispiele 1 und 2 zeigen, daß die Korngröße des Melamins von großer Bedeutung für das Brandverhalten des Schaumstoffs ist.

Während Beispiel 1 mit Melamin geringer Korngröße den Test besteht, fällt das Ergebnis mit Melamin großer Körnung wesentlich schlechter aus (Beispiel 2).

Mithin läßt sich durch Minimieren der Melaminmenge im unteren Rohdichtebereich ein effektvoller Flammschutz erreichen, wenn die Korngrößenabhängigkeit berücksichtigt wird.

## Ansprüche

1. Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3) Wasser und/oder organischen Treibmitteln und 4) Katalysatoren und 5) Melamin als Flammschutzmittel und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5) Melamin mit einer Korngröße von 5 bis 90 µm, vorzugsweise von 5 bis 50 µm, verwendet wird.

2. Verfahren gemäß Anspruch 1, dadurch gekennzeichnet, daß als Komponente 2) polymermodifizierte Polyole und/oder Polyole mit überwiegend primären Hydroxylgruppen verwendet werden.

3. Verfahren nach Anspruch 1 und 2, dadurch gekennzeichnet, daß als polymermodifizierte Polyole Polyharnstoffdispersionen in Polyethern verwendet werden.

4. Verfahren nach Anspruch 1 und 2, dadurch gekennzeichnet, daß als polymermodifizierte Polyole Alkanolaminaddukte von Diisocyanaten in Polyethern verwendet werden.

5. Verfahren nach Anspruch 1 und 2, dadurch gekennzeichnet, daß als polymermodifizierte Polyole gepfropfte Polyether, die durch Polymerisation von Acrylnitril und/oder Styrol in den Polyethern

enthalten wurden, verwendet werden.

6. Verfahren nach Anspruch 1 bis 5, dadurch gekennzeichnet, daß weitere Flammschutzmittel mitverwendet werden.

7. Verfahren nach Anspruch 1 bis 6, dadurch gekennzeichnet, daß Phosphonsäureester als weitere Flammschutzmittel mitverwendet werden.

8. Verfahren nach Anspruch 1 bis 6, dadurch gekennzeichnet, daß als Phosphonsäureester Trischlorethylphosphat als weiteres Flammschutzmittel mitverwendet wird.